# EUROPEAN PATENT APPLICATION

(11) **EP 0 663 440 A2**
(43) Date of publication of application: **19.07.1995**
(21) Application number: 95500004.7
(22) Date of filing: 12.01.1995
(51) Int. Cl.: C12C 1/027, C12C 1/067, C12C 1/135

(54) **Wanderhaufen-type malting plant**

(30) Priority: 12.01.1994 ES 9400057
(71) Applicant: SEEGER INDUSTRIAL, S.A., E-28028 Madrid (ES)
(72) Inventor: Belvedere, Francesco, E-28007 Madrid (ES)
(74) Representative: Maldona do Jordan, Julia

(57) **Abstract**

In a Wanderhaufen-type malting plant, a series of partition walls (8) which determine a series a compartments (9,9') for the different dosages of malt, have been provided. Thus, these dosages are kept isolated while they travel throughout the corridor (1) at given intervals from one compartment to another with the help of a screw conveyor (5), and their blending is prevented. The drying or roasting area or chamber (6) also incorporates partitioning walls (10) determining independent compartments (11), tightened with the help of a series of gates (12), which makes it possible to keep specific environments inside each of the compartments (11), in order to optimize the drying conditions.

## Description

This invention refers to a series of improvements introduced in malting plants, i.e. in facilities designed for the germination of malt, and more specifically, those of a Wanderhaufen-type. All these improvements are conceived to obtain better operating conditions throughout the whole process.

As it is well known, during the conventional malting process, the malt undergoes a steeping stage, in order to ferment. Afterwards, the product undergoes a malt drying or roasting process. The germination takes approximately six days, and during this period, the malt has to be agitated, so that the fermentation take place under the best conditions.

There are different kinds of malting plants, depending on the agitation system selected. One of them is normally known as "Wanderhaufen".

In this type of malting plants, the green malt is conveniently distributed along a germinating area consisting of a germinating corridor of a considerable length (approximately 100 meters) where, under the normal operating conditions of the malting plant a series of malt piles are arranged. The germinating corridor incorporates a power system that, with the help of a screw conveyor, moves every malt pile to the position previously occupied by the adjacent pile. In this way, each malt pile or portion travels the whole germinating corridor step by step, by means of subsequent and intermittent movements, separated by a time span which corresponds to a whole operating day or half an operating day, as it be deemed convenient. In this manner, the malt takes the necessary time to travel along the whole corridor, so that such germination take place under the optimum conditions. It is also subject to periodical agitations that also ensure a homogeneous and correct distribution of humidity. Finally, the malt is conveyed to the drying or roasting area or chamber, where it is finally dried or roasted. The drying chamber is an extension of the germinating corridor. This structure can adopt a multiple layout, so that several corridors, adjacent or one over another, may exist, assisted by the same malt agitation equipment.

However, this solution poses a two-fold problem:

On the one hand, and taking into consideration the fact that it is desirable to take maximum advantage of the space available, the malt piles arranged along the germinating corridor are partially overlapped, due to the unavoidable slope found at their edges. This entails the partial blend of the grains of both piles and, in turn, there are grains with a travelling speed along the germination corridor which is higher than that expected. Therefore, these grains reach the drying chamber only partially fermented, while others may have been delayed during their travel, thus reaching the drying chamber over-fermented.

On the other hand, the fermentation should be performed under determined humidity and temperature conditions which are obviously different from those which exist at the drying area. Although there is a gate between the germinating corridor and the relevant drying area, such gate must be opened during the operating stage of conveying the malt from the end of the germinating corridor to the drying chamber. This entails the direct communication between two completely different environments, with the subsequent prejudice for both chambers. This problem is so important that in many malting plants of this kind, in fact, the drying chamber and the germinating area are completely independent, with the negative consequence that the malt must be conveyed between two substantially isolated areas.

The improvements proposed by the invention which, as it has been previously mentioned, are applicable to Wanderhaufen-type malting plants, have been designed to solve satisfactorily the above mentioned problems as far as both aspects are concerned.

More specifically, and for this purpose, one of the characteristics or improvements of the invention lies in the fact that the germinating corridor or corridors of the malting plant is divided into compartments by means of vertical partition walls, so that each compartment corresponds to one of the malt piles previously mentioned, but the existence of the walls prevents the grain from a pile to be blended with those of the adjacent pile. In this way, by totally clearing the compartment, it is possible to guarantee that each and every malt grain travels along the germinating corridor at predetermined intervals.

According to another characteristic of the invention, the presence of similar compartments at the drying stage has been also provided, with the peculiarity that each of the partition walls of such area incorporates a shutting gate which permits the complete isolation of such compartments.

Finally, and in accordance with another characteristic of the invention, each drying compartment incorporates its own drying or roasting means, independent from the other compartments, which allow the hot air to circulate in closed or open cycles, with the purpose of adapting the drying conditions, in any moment, to those considered more appropriate.

To complement this description and with the aim at permitting a better understanding of the main characteristics of the invention, a set of drawings is attached to this description forming an integral part of it and where, as an illustration and without limitation, the following has been represented:

Figure 1 shows a schematic representation of a side elevation, in longitudinal section, of a corridor corresponding to a Wanderhaufen-type malting plant, which incorporates the improvements of this invention.

Figure 2 shows a cross section of the elements depicted in the previous figure.

Figure 3, finally, shows a schematic representation, in perspective, of the drying or roasting system which permits a total independence of each drying compartment defined at the drying or roasting area.

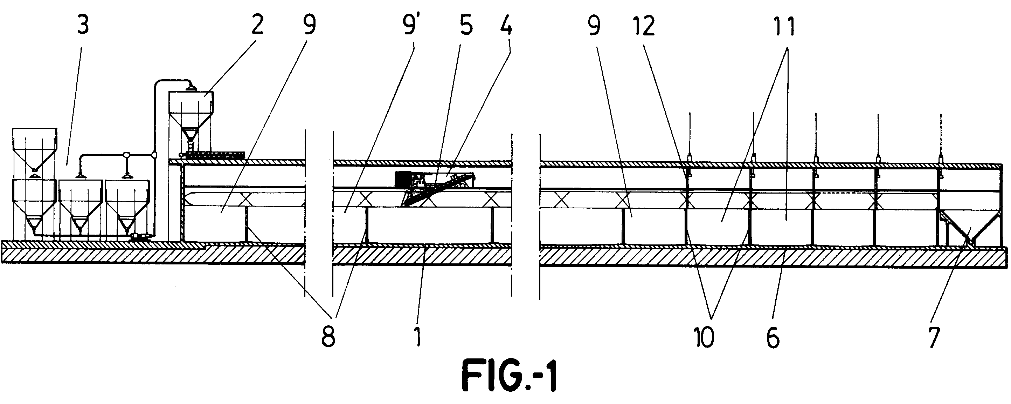

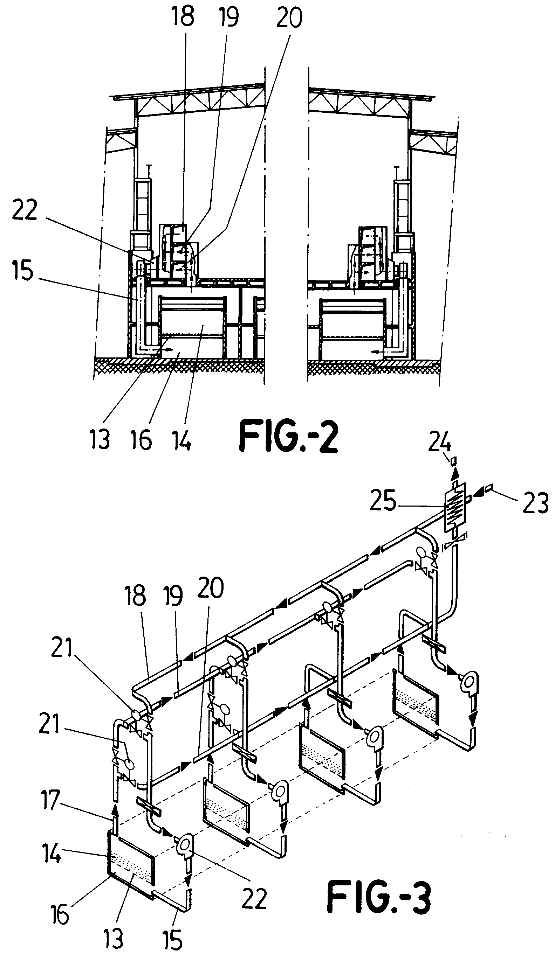

In the light of these figures, and more specifically, of figures 1 and 2, it can be appreciated how the improvements proposed can be applied to a malting plant of the Wanderhaufen-type, which includes one or more germinating corridors (1) of an appropriate length, apt to receive the malt at one end, conveniently dosed, from a hopper (2) which, in turn, receives the malt from the relevant silo (3), so that the malt piles fed by the hopper (2) at the starting end of the germinating corridor (1) advance gradually along such corridor, with the help of agitating equipment (4) incorporating a screw conveyor (5) which can take or absorb the malt at a specific point and discharge it at a more advanced point of the germinating corridor (1), until it finally reaches the drying chamber (6) which is an extension of such germinating corridor (1), where the final drying or roasting of the malt takes place before it reaches the output hopper (7).

Therefore, from this basic and conventional structure, one of the improvements lies in the incorporation, within the germinating corridor (1), of a series of partition walls (8) that determine a series of compartments (9-9') corresponding to the relevant dosages of malt grains. In figure 1, such compartments have different volumes. This is due to the fact that it has been foreseen that the malt be retained inside the first compartment (9) during a period (preferably eight hours) which is typically half of the period during which it is retained inside the compartment (9') and the following ones, with the exception of the compartment (9) located just immediately before the drying or roasting area (6) with a volume equal to that of the first compartment.

In this manner, it is possible to guarantee that the different dosages fed by the hopper (2), while they are grouped in pairs after the first compartment (9), are kept perfectly isolated throughout the germinating corridor (1), thus preventing the usual partial blending and, therefore, preventing any anomalies during the advance of the grains along such corridor.

In accordance with another of the improvements of the invention, and as it can be also seen in Figure 1, it has been foreseen that the drying chamber (6) also incorporates a series of partition walls (10) which determine isolated enclosures (11) of a volume adequate for the dosages fed from the last compartment (9) of the germinating corridor, with the additional peculiarity that such compartments (11) can be closed tight, with the help of a series of gates (12) which are operatively opposed to the walls (10). In this way, the tightness of the compartments (11) is maintained, except during those critical moments when the malt is conveyed from one of them to another.

Such isolation and tightness of the drying or roasting area (6) allows the improvement of such drying conditions, by establishing the adequate environment for each of the chambers or compartments (11), with the help of the system represented in Figure 3.

More specifically, each of these compartments (11), as usual in the art, incorporates a grate (13) supporting the malt (14), so that the air flows through the ducts (15) to the chamber (16) located under the grate (13), flowing upwards through the malt (14) and drying it, until the output duct (17) is reached. Therefore, by means of the ancillary ducts (18), (19) and (20) and the governing valves (21), which are conveniently governed, the air injector (22) to the pipe (15) can take external air by the input (23). Such external air recirculates to the exterior through the output (24), with which a heat exchanger (25) cooperates, to recover residual heat. Alternatively, each compartment (11) can incorporate a closed circuit or a closed circuit can be established for two or more of such compartments (11). The aim of this, as it has been previously mentioned, is to keep each of these compartments (11) under the most appropriate environmental temperature and relative humidity conditions to achieve the optimal drying or roasting of the malt.

## Claims

**1.-** A Wanderhaufen-type malting plant comprising:
a germinating area,
means for distributing the malt to the germinating area,
means for conveying the malt throughout the germinating area, and
means for agitating the malt in the germinating area,
characterized by
a series of partition means in the germinating area, which determine a series of compartments (9,9').

**2.-** A Wanderhaufen-type malting plant according to claim 1, wherein the partition means in the germinating area are partition walls (8).

**3.-** A Wanderhaufen-type malting plant according to claim 1 or 2, wherein the compartments (9,9') are able to house different malt dosages.

**4.-** A Wanderhaufen-type malting plant according to claim 1, 2 or 3, further comprising a drying or roasting area.

**5.-** A Wanderhaufen-type malting plant according to claim 4, further characterized by a series of partition means in the drying or roasting area, which determine a series of compartments (11).

**6.-** A Wanderhaufen-type malting plant according to claim 5, wherein the partition means in the drying or roasting area are partition walls (10).

**7.-** A Wanderhaufen-type malting plant according to claim 5 or 6, wherein the compartments (11) in the drying or roasting area are able to house different dosages of malt.

**8.-** A Wanderhaufen-type malting plant according to claim 5, 6, or 7, wherein the partition means in the drying or roasting area incorporate opening means.

**9.-** A Wanderhaufen-type malting plant according to claim 8, wherein the opening means are gates (12).

**10.-** A Wanderhaufen-type malting plant according to claim 8 or 9, wherein the compartments (11) defined in the drying or roasting area are kept tight, except when the malt is conveyed from one of them to another.

**11.-** A Wanderhaufen-type malting plant according to claim 5, 6, 7, 8, 9 or 10, wherein each of the compartments (11) in the drying or roasting area incorporates its own drying means.

**12.-** A Wanderhaufen-type malting plant according to claim 11, wherein the drying means comprise
an air injector (22) capable of acting in closed or open circuit or communicated with other compartments (11),
a duct (15) for the flow of air,
a series of pipes (18), (19), (20) which communicate the compartments (11),
an air input (23),
an output duct (17),
an air output (24),
a heat exchanger (25), and
a series of valves or shut-off cocks (21).

**13.-** A Wanderhaufen-type malting plant, according to claim 1, 2, 3, 4, 5, 6, 7, 8, 9, 10, 11 or 12, wherein the germinating area comprises at least one germinating corridor (1).

**14.-** A Wanderhaufen-type malting plant according to claim 1, 2, 3, 4, 5, 6, 7, 8, 9, 10, 11, 12 or 13, wherein the means for distributing malt to the germinating area are a silo (3) and a feeding hopper (2).

**15.-** A Wanderhaufen-type malting plant according to claim 1, 2, 3, 4, 5, 6, 7, 8, 9, 10, 11, 12, 13 or 14, wherein the means for conveying the malt along the germinating area and the means for agitating the malt are a screw conveyor (5).
